# EUROPÄISCHE PATENTSCHRIFT

(11) **EP 3 588 166 B1**
(45) Veröffentlichungstag und Bekanntmachung des Hinweises auf die Patenterteilung: **11.06.2025**
(21) Anmeldenummer: 19181880.6
(22) Anmeldetag: 24.06.2019
(51) Int. Cl.: G02B 23/16, G02B 27/00

(54) **OPTISCHES ELEMENT MIT ABZIEHBARER SCHUTZFOLIE**
OPTICAL ELEMENT WITH A PEELABLE PROTECTIVE FILM
ÉLÉMENT OPTIQUE À FEUILLE DE PROTECTION POUVANT ÊTRE RETIRÉE

(30) Priorität: 29.06.2018 DE 102018210680
(43) Veröffentlichungstag der Anmeldung: 01.01.2020
(73) Patentinhaber: TRUMPF Werkzeugmaschinen SE + Co. KG, 71254 Ditzingen (DE); TRUMPF Laser SE, 78713 Schramberg (DE)
(72) Erfinder: FUCHS, Stefan, 78661 Böhringen (DE); BRAUN, Jens, 70327 Stuttgart (DE); KRENZ, Carsten, 70771 Leinfelden-Echterdingen (DE); GUTOEHRLEIN, Björn, 71229 Warmbronn (DE); MAIER, Dominik, 78662 Bösingen (DE)
(74) Vertreter: Trumpf Patentabteilung

(56) Entgegenhaltungen:
- WO-A2-03/060563
- DE-A1- 102014 202 075
- KR-B1- 101 472 263
- US-A1- 2017 242 455
- WEICON: "Montage-Klebebänder, Leitfaden für die fachgerechte Beratung und Verwendung", 27 August 2018 (2018-08-27), XP055642627, Retrieved from the Internet <URL:https://www.weicon.de/media/pdf/6c/9b/fc/FLY_DE_Basiswissen.pdf> [retrieved on 20191114]

## Beschreibung

Die Erfindung betrifft ein in einer Fassung gefasstes optisches Element.

Optische Elemente für einen Laserbearbeitungskopf oder ein daran anschließbares Lichtleitkabel, wie beispielsweise Linsen oder Schutzgläser, sind üblicherweise in einem Halter oder Rahmen gefasst und werden mittels dieses Halteelements im oder am Laserbearbeitungskopf bzw. Stecker des Lichtleitkabels angebracht. Das Halteelement wird dazu entweder in eine Aufnahme eingeschoben oder mittels eines Gewindes am Bearbeitungskopf oder am Stecker angeschraubt. Hierbei können sich Partikel am Gewinde lösen und auf das optische Element oder weitere optische Komponenten des Laserbearbeitungskopfs fallen. Bei einem Tausch des optischen Elements, beispielsweise aufgrund von Verschmutzung, können Partikel aus der Umgebungsluft auf das neu anzubringende optische Element fallen, die dann im Betrieb des Laserbearbeitungskopfs Probleme verursachen können.

Das Hauptziel beim Tauschen eines optischen Elements, z.B. bei einem Schutzglaswechsel, ist es, das verschmutzte oder defekte optische Element durch ein neues, sauberes Element zu ersetzen. Hierbei muss üblicherweise die sensible Schnittstelle zwischen dem Laserbearbeitungskopf und dem Stecker des Lichtleitkabels geöffnet werden. Bei diesem Vorgang muss verhindert werden, dass Partikel auf optische Komponenten im Laserbearbeitungskopf oder Stecker fallen. Durch die hohe Leistungsdichte an den optischen Komponenten würden solche Partikel einbrennen und somit zu einer Verschlechterung der Strahlqualität bis hin zu einem Ausfall des kompletten Systems führen. Aufgrund dieser Problematik ist es wichtig, beim Tausch eines optischen Elements die höchstmögliche Sauberkeit sicherzustellen.

Für die Erleichterung des Tauschs von optischen Elementen an Laserbearbeitungsköpfen gibt es bereits verschiedene Vorschläge:
Aus der WO 2011/004084 A1 ist ein Laserbearbeitungskopf mit einer Fokussierlinse bekannt, die in einer Kassette gehalten ist, welche in das Gehäuse des Laserbearbeitungskopfs eingeschoben wird. Für das Entnehmen der Linse aus der Kassette bzw. für das Einsetzen einer neuen Linse ist allerdings ein spezielles Werkzeug notwendig, damit die Linse nicht mit den Händen an den optisch aktiven Flächen gegriffen wird.

In der EP 1 324 093 A1 wird ein Transportbehälter für ein optisches Bauteil beschrieben. Das Bauelement kann mittels eines Schiebers aus dem Transportbehälter herausgeführt werden, um es in eine Anlage einzuwechseln. Der Transportbehälter ist allerdings verhältnismäßig groß und komplex und daher für den Tausch eines optischen Elements im Stecker eines Lichtleitkabels nicht geeignet.

Aus der DE 10 2013 105 945 A1 ist ferner ein Laserbearbeitungskopf bekannt, der aus zwei drehbar miteinander verbundenen Gehäuseteilen besteht. Ein Schutzglas ist in dem einen, ersten Gehäuseteil angeordnet und bildet eine zum anderen, zweiten Gehäuseteil weisende Stirnfläche des ersten Gehäuseteils. Die Fassung des Schutzglases weist eine Unterbrechung auf, so dass das Schutzglas an seiner Umfangsfläche gegriffen werden kann.

Schließlich ist in der DE 20 2014 103 543 U1 noch eine Verpackung für ein optisches Element beschrieben, das in einem Halter mit flexiblem Boden und zwei seitlichen Wandabschnitten gehalten ist. Das optische Element kann mittels des Halters aus der Verpackung genommen und durch Verformen des flexiblen Bodens aus dem Halter freigegeben werden.

Der Schutz von Oberflächen mittels entfernbarer Schutzfolien ist aus der US 2017 242455 A1 für einen Touchscreen, aus der WO 2003/060563 A2 für ein Gesichtsschild und aus der DE 10 2014 202 075 A1 für die Optik eines Kamerasystems für minimalinvasive Chirurgie bekannt. Bei diesen Anwendungen wird die geschützte Oberfläche direkt von der Schutzfolie berührt.

Der vorliegenden Erfindung stellt sich die Aufgabe, eine alternative Vorrichtung zum einfachen und sauberen Tausch optischer Elemente in einem Laserbearbeitungskopf oder in einem Stecker eines Lichtleitkabels bereitzustellen.

Diese Aufgabe wird bei einem in einer Fassung gefassten optischen Element, das als Schutzglas, Spiegel oder Linse für einen Laserbearbeitungskopf oder für den Stecker eines Lichtleitkabels ausgebildet ist, dadurch gelöst, dass eine Seite des optischen Elements von einer Schutzfolie zumindest teilweise, insbesondere vollständig, überdeckt ist, die an eine das optische Element umgebende Stirnseite der Fassung über mindestens eine Klebefläche angeklebt ist, und dass die Schutzfolie einen seitlichen Überstand zur Handhabung des optischen Elements und zum Abziehen der Schutzfolie von der Fassung aufweist. Die dem optischen Element zugewandte Folienseite der Schutzfolie ist zumindest in dem das optische Element überdeckenden Bereich nichtklebend, um sicherzustellen, dass die Schutzfolie nicht am optischen Element haftet. Die Stirnseite der Fassung steht in der Höhe über die überdeckte Seite des optischen Elements über, um dadurch einen Kontakt der Schutzfolie mit dem optischen Element zu verhindern. So können keine Partikel von der Schutzfolie auf das optische Element gelangen.

Erfindungsgemäß dient die Schutzfolie somit einerseits dem Schutz des optischen Elements vor Verschmutzung und andererseits als Montage-Hilfsmittel: Das optische Element kann an der Schutzfolie gegriffen und beispielsweise in einen Laserbearbeitungskopf oder in den Stecker eines Lichtleitkabels eingesetzt werden. Anschließend wird die Schutzfolie rückstandsfrei von der Fassung abgezogen. Auf diese Weise können Partikel aus der Umgebungsluft nur schwer auf das neu montierte Schutzglas fallen. Die Reißfestigkeit der Schutzfolie ist so gewählt, dass sie weder durch das Gewicht des gefassten optischen Elements noch beim Abziehen reißt. Vorteilhaft ist die Haltekraft der mindestens einen Klebefläche bzw. aller Klebeflächen zusammen größer, insbesondere mindestens 1,3 Mal größer, als die gemeinsame Gewichtskraft des optischen Elements und der Fassung und die Reißfestigkeit der Schutzfolie größer als die Haltekraft der mindestens einen Klebefläche pro Flächeneinheit der Klebefläche. Bevorzugt ist die Klebkraft der mindestens einen Klebefläche größer als 1,3 N/25mm, insbesondere größer als 5 N/25mm und beträgt besonders bevorzugt mindestens 8 N/25mm. Auf diese Weise kann das in der Fassung gefasste optische Element sicher mittels der Schutzfolie gehalten und getragen werden.

Idealerweise ist das optische Element in die Fassung eingeklebt, so dass keine Gewindeverbindungen vorhanden sind, die beim Montieren des optischen Elements in die Fassung einen Gewindeabrieb bewirken könnten.

Soll ein kleines optische Element in ein Bauteil mit geringem Bauraum, z.B. in den Stecker eines Lichtleitkabels eingesetzt werden, so braucht die Schutzfolie nur an einer Seite, z.B. in Form einer Lasche, über die Fassung überzustehen, so dass der Anwender beim Tausch des optischen Elements eine Hand frei hat, um das Bauteil zu halten, in das das optische Element eingesetzt werden soll. Bei einem größeren (schwereren) optischen Element dienen zwei seitlich überstehende Laschen dem zielsicheren Einführen des optischen Elements in das Bauteil, z.B. in den Laserbearbeitungskopf. So kann das optische Element auch in eine enge Passung eingeführt werden, ohne zu verkanten. Es ist auch möglich, ein erfindungsgemäßes optisches Element in eine Kassette einzusetzen und anschließend die Schutzfolie abzuziehen, bevor die Kassette in den Laserbearbeitungskopf eingeschoben wird.

Bei besonders bevorzugten Ausführungsformen ist die Schutzfolie eine Polyesterfolie und die mindestens eine Klebefläche, insbesondere auf Silikonbasis, beim Abziehen der Schutzfolie zusammen mit der Schutzfolie von der Fassung, also rückstandsfrei, entfernbar.

In einer bevorzugten Ausführungsform weist die Schutzfolie ausschließlich in Bereichen, die an der Stirnseite der Fassung anliegen, die mindestens eine freiliegende Klebefläche auf. Beispielsweise kann die Schutzfolie ausschließlich in diesen Bereichen eine lokale Klebebeschichtung aufweisen, welche die mindestens eine freiliegende Klebefläche ausbildet.

In einer anderen Weiterbildung ist die Schutzfolie durch zwei mittels einer dazwischen befindlichen Klebeschicht miteinander verklebte Folienlagen gebildet, wobei die Klebeschicht von der dem optischen Element zugewandten, unteren Folienlage bis auf die mindestens eine freiliegende Klebefläche abgedeckt ist. Die untere Folienlage kann beispielsweise mehrere einzelne bzw. separate Folienabschnitte zum Abdecken der Klebeschicht oder mindestens eine Aussparung aufweisen, durch welche die Klebeschicht als Klebefläche freigelegt ist. Im letzteren Fall können die beiden Folienlagen durch zwei aufeinander geklappte Folienabschnitte einer einseitig mit der Klebeschicht versehenen Klebefolie gebildet sein, die jeweils mit ihren Klebeseiten aneinander anliegen. Im Bereich des Schutzglases ist die Schutzfolie also so gefaltet, dass sich außen jeweils die nichtklebende Folienseite befindet und sich die Klebeseiten berühren. So wird sichergestellt, dass die Klebeseite das optische Element nicht berührt. Durch eine oder mehrere Aussparungen in der unteren Folienlage kommt die Klebeseite der oberen Folienlage in Kontakt mit der Fassung.

Erfindungsgemäß steht die Stirnseite der Fassung in der Höhe über die überdeckte Seite des optischen Elements über, um dadurch einen Kontakt der Schutzfolie mit dem optischen Element zu verhindern. Ausgehend von ihrer überstehenden Stirnseite kann sich die Fassung stufenlos, insbesondere konisch oder konkav, nach innen bis zum optischen Element erstrecken. Diese Oberflächenform erleichtert die Reinigung des optischen Elements mit einem mit Reinigungsmittel getränkten Wattestäbchen: Es kann ohne Absetzen die gesamte Fläche gereinigt werden, ohne dass die Gefahr besteht, dass sich Fasern des Wattestäbchens lösen und in der Fassung hängen bleiben. Wenn das optische Element in der Höhe über einen angrenzenden Innenrand der Fassung übersteht, kann sich beim Reinigen kein Schmutz auf dem optischen Element ansammeln, wie es bei einem gegenüber dem Innenrand tieferliegenden (versenkten) optischen Element der Fall wäre.

Vorteilhaft ist das optische Element in einer die Fassung umschließenden Schutzverpackung so angeordnet, dass es mittels des seitlichen Überstands der Schutzfolie aus der geöffneten Schutzverpackung entnehmbar ist.

Weitere Vorteile und vorteilhafte Ausgestaltungen des Gegenstands der Erfindung ergeben sich aus der Beschreibung, den Ansprüchen und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung. Es zeigen:
- Fign. 1a, 1b: schematisch ein erfindungsgemäßes optisches Element mit einer aufgeklebten, einlagigen Schutzfolie (Fig. 1a) und mit abgezogener Schutzfolie (Fig. 1b);
- Fign. 2a, 2b: den Querschnitt einer zweilagigen Schutzfolie (Fig. 2a) und einen zugrundeliegenden Folienzuschnitt (Fig. 2b);
- Fig. 3: den Querschnitt des erfindungsgemäßen optischen Elements;
- Fign. 4a, 4b: eine Schutzverpackung für das erfindungsgemäße optische Elements im geschlossenen Zustand (Fig. 4a) und im geöffneten Zustand (Fig. 4b);
- Fign. 5a, 5b: einen Längsschnitt durch ein in einem Laserbearbeitungskopf eingebautes optisches Element (Fig. 5a) und eine perspektive An- sicht des Laserbearbeitungskopfs beim Tauschen des optischen Elements (Fig. 5b); und
- Fig. 6: eine perspektive Ansicht eines Laserlichtkabels beim Tauschen des optischen Elements.

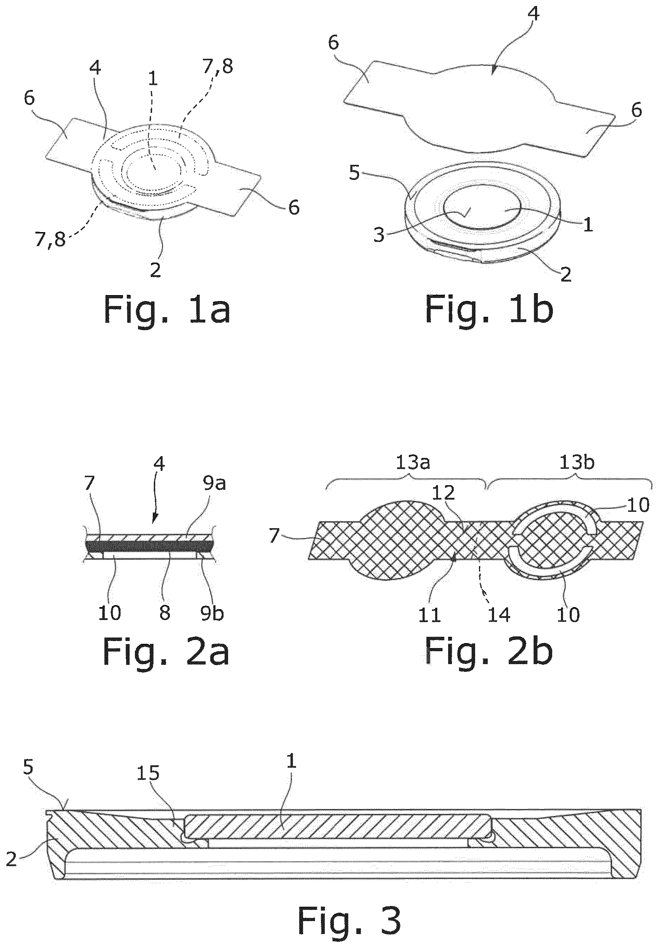

**Fign. 1a, 1b** zeigen ein in einer Fassung **2** gefasstes optisches Element **1,** wie z.B. ein Schutzglas, einen Spiegel oder eine Linse.

Die Oberseite **3** des optischen Elements 1 ist von einer Schutzfolie **4** vollständig überdeckt, die an die das optische Element 1 ringförmig umgebende, obere Stirnseite **5** der Fassung 2 angeklebt ist. Zur Handhabung des optischen Elements 1 und zum Abziehen der Schutzfolie 4 von der Fassung 2 weist die Schutzfolie 4 einen seitlichen Überstand in Form von zwei einander gegenüberliegenden Laschen **6** auf, die seitlich über die Fassung 2 nach außen vorstehen. Die Schutzfolie 4 besteht vorzugsweise aus einer Polyesterfolie, auf die einseitig eine Klebeschicht **7** auf Silikonbasis aufgebracht ist. Diese Klebschicht 7 lässt sich beim Abziehen der Schutzfolie 4 von der Fassung 2 zusammen mit der Polyester-Folie rückstandsfrei entfernen.

Wie in Fig. 1a gezeigt, kann die dem optischen Element 1 zugewandte Folienunterseite ausschließlich in Bereichen, die an der Stirnseite 5 der Fassung 2 anliegen, eine solche Klebeschicht 7 aufweisen, um hier lediglich beispielhaft zwei nahezu halbkreisförmige, lokale Klebeflächen **8** auszubilden, mit denen die Schutzfolie 4 an die Stirnseite 5 der Fassung 2 angeklebt ist. Die Folienunterseite ist in dem das optische Element 1 überdeckenden Bereich nichtklebend und kann daher nicht am optischen Element 1 haften. Zudem steht die Stirnseite 5 der Fassung 2 nach oben über die überdeckte Oberseite 3 des optischen Elements über, um so einen Kontakt der Schutzfolie 4 mit dem optischen Element 1 zu verhindern.

**Fig. 2a** zeigt den Querschnitt einer zweilagigen Schutzfolie 4, die zwischen ihren zwei Folienlagen **9a, 9b** eine Klebeschicht 7 aufweist. Die in Fig. 2a untere Folienlage 9b weist mindestens eine Aussparung **10** auf, durch welche die Klebeschicht 7 als Klebefläche 8 freigelegt ist.

In **Fig. 2b** ist ein einteiliger Folienzuschnitt **11** für die zweilagige Schutzfolie 4 gezeigt. Auf die in Fig. 2b sichtbare Oberseite **12** des Folienzuschnitts 11 ist vollflächig die Klebeschicht 7 aufgebracht. Der Folienzuschnitt 11 besteht aus zwei deckungsgleichen Folienabschnitten **13a, 13b,** wobei der in Fig. 2b rechte Folienabschnitt 11b zwei nahezu halbkreisförmige Aussparungen 10 aufweist. Die beiden Folienabschnitte 13a, 13b werden mit ihren Klebeseiten um eine mittige Falzlinie **14** aufeinander geklappt, um die in **Fig.** 2a gezeigte zweilagige Schutzfolie 4 auszubilden.

Statt als einteiliger Folienzuschnitt kann die Schutzfolie 4 auch eine aus mehreren separaten Folienabschnitten gebildete untere Folienlage aufweisen, um unterschiedliche Bereich der Klebeschicht 7 abzudecken und nur die erforderlichen Klebeflächen 8 freizulassen. Alternativ kann die Schutzfolie 4 einlagig ausgebildet sein und eine klebende Beschichtung 7 als Klebefläche(n) 8 aufweisen.

Ausgehend von ihrer nach oben über das optische Element 1 überstehenden Stirnseite 5 erstreckt sich die Fassung 2, wie in **Fig. 3** gezeigt, ohne Stufen konisch nach unten und nach innen bis zu einem an das optische Element 1 angrenzenden Innenrand **15.** Dies erleichtert die Reinigung des optischen Elements 1 mit einem mit Reinigungsmittel getränkten Wattestäbchen: Es kann ohne Absetzen die gesamte Fläche gereinigt werden, ohne dass die Gefahr besteht, dass sich Fasern lösen und hängen bleiben. Das optische Element 1 steht nach oben über den Innenrand 15 der Fassung 2 über, sodass sich beim Reinigen kein Schmutz auf dem optischen Element 1 ansammeln kann, wie es bei einem gegenüber dem Innenrand 15 tieferliegenden (versenkten) optischen Element 1 der Fall wäre.

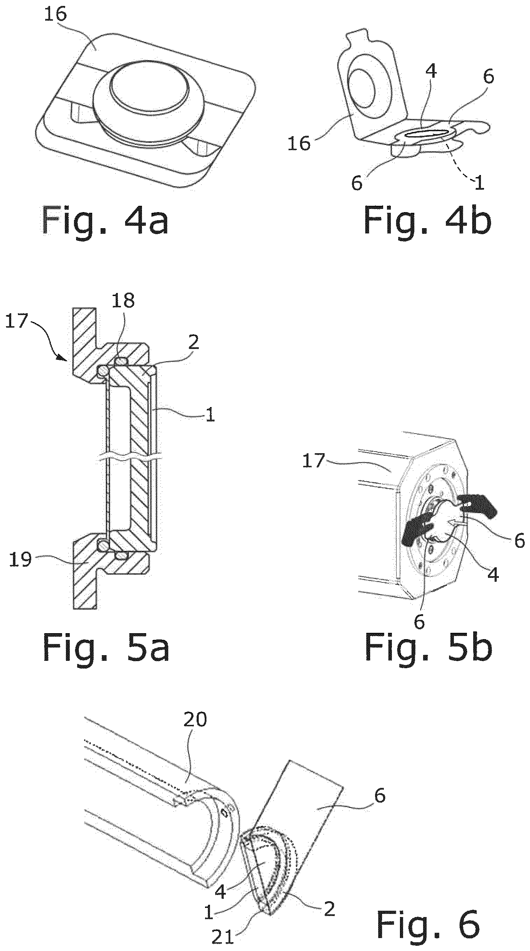

Wie in **Fign. 4a, 4b** gezeigt, wird das oberseitig abgeklebte optische Element 1 in einer aufklappbaren Schutzverpackung **16** aufbewahrt, durch deren Boden auch die Unterseite des optischen Elements 1 vor Verunreinigung geschützt ist. Das optische Element 1 wird in der Schutzverpackung 16 in einer Aufnahme so angeordnet, dass die Fassung 2 vom Rand der Aufnahme umschlossen ist. An den außerhalb der Aufnahme angeordneten Laschen 6 der Schutzfolie 4 kann das optische Element 1 gegriffen und aus der Schutzverpackung 16 entnommen werden.

Im Folgenden wird der Tausch des optischen Elements 1 am Beispiel eines Schutzglases beschrieben, das in einem Laserbearbeitungskopf oder im Stecker eines Lichtleitkabels angeordnet ist.

Wie in **Fig. 5a** gezeigt, ist die Fassung 2 des Schutzglases 1 im (nur angedeuteten) Laserbearbeitungskopf **17** einer Lasermaschine durch einen elastischen Ring **18** kraftschlüssig im Gehäuse **19** gehalten. Für den Tausch des Schutzglases 1 wird zunächst die Verbindung zwischen einem Lichtleitkabel (nicht gezeigt) und dem Laserbearbeitungskopf 17 gelöst. Soll das Schutzglas 1 getauscht werden, so wird das verschmutzte Schutzglas 1 beispielsweise mit einem Hebelwerkzeug aus dem Gehäuse 19 entnommen. Anschließend wird ein neues Schutzglas 1 aus der Schutzverpackung 16 entnommen, und zwar mit der abgedeckten Seite nach oben zeigend, damit keine Partikel auf die ungeschützte Seite des Schutzglases 1 fallen können. Dabei wird das Schutzglas 1 beidhändig an den beiden seitlich überstehenden Laschen 6 der Schutzfolie 4 gegriffen. Mit Hilfe der Schutzfolie 4 wird das Schutzglas 1 in das Gehäuse 19 eingesetzt (**Fig. 5b**) und abschließend die Schutzfolie 4 von der Fassung 2 abgezogen. Danach kann das Lichtleitkabel wieder mit dem Laserbearbeitungskopf 17 verbunden werden.

Wie in **Fig. 6** gezeigt, ist die Fassung 2 des Schutzglases 1 im Stecker **20** eines Lichtleitkabels mittels zweier Madenschrauben (nicht gezeigt) gehalten, die in eine Ringnut **21** am Fassungsumfang eingreifen. Für den Tausch des Schutzglases 1 werden die Madenschrauben am Stecker 20 gelöst und danach die Fassung 2 samt Schutzglas 1, z.B. mittels einer aufgeklebten Klebefolie, vom Stecker 20 entfernt. Anschließend wird ein neues Schutzglas 1 aus der Schutzverpackung 16 entnommen, und zwar mit der abgedeckten Seite nach oben, damit keine Partikel auf die ungeschützte Seite des Schutzglases 1 fallen können. Dabei wird das Schutzglas 1 einhändig an einer seitlich überstehenden Lasche 6 der Schutzfolie 4 gegriffen. Mit Hilfe der Schutzfolie 4 wird das Schutzglas 1 in den Stecker 20 eingeführt. Befindet sich das Schutzglas 1 an der richtigen Stelle, wird die Fassung 2 über die Madenschrauben im Stecker 20 fixiert und abschließend die Schutzfolie 4 von der Fassung 2 abgezogen.

Der Vorteil bei dem beschriebenen Tausch besteht darin, dass die Schutzfolie 4 erst im letzten Arbeitsschritt vom Schutzglas 1 entfernt wird. Dadurch gelangen keine Partikel aus der Umgebungsluft auf das neue Schutzglas 1.

## Patentansprüche

1. In einer Fassung (2) gefasstes optisches Element (1), wobei das optische Element (1) ein Schutzglas, ein Spiegel oder eine Linse für einen Laserbearbeitungskopf oder für den Stecker eines Lichtleitkabels ist,
**dadurch gekennzeichnet,**
**dass** eine Seite (3) des optischen Elements (1) von einer Schutzfolie (4), insbesondere Polyesterfolie, zumindest teilweise, insbesondere vollständig, überdeckt ist, die an eine das optische Element (1) umgebende Stirnseite (5) der Fassung (2) über mindestens eine Klebefläche (8) angeklebt ist, und dass die Schutzfolie (4) einen seitlichen Überstand (6) zur Handhabung des optischen Elements (1) und zum Abziehen der Schutzfolie (4) von der Fassung (2) aufweist, und dass die dem optischen Element (1) zugewandte Folienseite der Schutzfolie (4) zumindest in dem das optische Element (1) überdeckenden Bereich nichtklebend ist, und dass die Stirnseite (5) der Fassung (2) in der Höhe über die überdeckte Seite (3) des optischen Elements (1) übersteht, so dass ein Kontakt der Schutzfolie (4) mit dem optischen Element (1) verhindert wird.

2. Optisches Element nach Anspruch 1, **dadurch gekennzeichnet, dass** sich die Fassung (2) ausgehend von der überstehenden Stirnseite (5) stufenlos, insbesondere konisch oder konkav, nach innen bis zum optischen Element (1) erstreckt.

3. Optisches Element nach Anspruch 1 oder 2, **dadurch gekennzeichnet, dass** die mindestens eine Klebefläche (8), insbesondere auf Silikonbasis, beim Abziehen der Schutzfolie (4) zusammen mit der Schutzfolie (4) von der Fassung (2) entfernbar ist.

4. Optisches Element nach einem der vorhergehenden Ansprüche, **dadurch gekennzeichnet, dass** die Schutzfolie (4) ausschließlich in Bereichen, die an der Stirnseite (5) der Fassung (2) anliegen, die mindestens eine freiliegende Klebefläche (8) aufweist.

5. Optisches Element nach Anspruch 4, **dadurch gekennzeichnet, dass** die Schutzfolie (4) ausschließlich in Bereichen, die an der Stirnseite (5) der Fassung (2) anliegen, eine lokale Klebeschicht (7) aufweist, welche die mindestens eine freiliegende Klebefläche (8) ausbildet.

6. Optisches Element nach Anspruch 4, **dadurch gekennzeichnet, dass** die Schutzfolie (4) durch zwei mittels einer dazwischen befindlichen Klebeschicht (7) miteinander verklebte Folienlagen (9a, 9b) gebildet ist, wobei die Klebeschicht (7) von der dem optischen Element (1) zugewandten, unteren Folienlage (9b) bis auf die mindestens eine freiliegende Klebefläche (8) abgedeckt ist, und insbesondere dass die beiden Folienlagen (9a, 9b) durch zwei aufeinander geklappte Folienabschnitte (13a, 13b) einer einseitig mit der Klebeschicht (7) versehenen Klebefolie gebildet sind, die jeweils mit ihren Klebeseiten aneinander anliegen, wobei die untere Folienlage (9b) mindestens eine Aussparung (10) aufweist, durch welche die Klebeschicht (7) als Klebefläche (8) freigelegt ist.

7. Optisches Element nach einem der vorhergehenden Ansprüche, **dadurch gekennzeichnet, dass** das optische Element (1) in der Höhe über einen angrenzenden Innenrand (15) der Fassung (2) übersteht.

8. Optisches Element nach einem der vorhergehenden Ansprüche, **dadurch gekennzeichnet, dass** der seitliche Überstand der Schutzfolie (4) durch eine oder mehrere Laschen (6) gebildet ist.

9. Optisches Element nach einem der vorhergehenden Ansprüche, **gekennzeichnet durch** eine die Fassung (2) umschließende Schutzverpackung (16), in der das optische Element (1) so angeordnet ist, dass es mittels des seitlichen Überstands (6) der Schutzfolie (4) aus der geöffneten Schutzverpackung (16) entnehmbar ist.

## Claims

1. An optical element (1) mounted in a holder (2), wherein the optical element (1) is a protective glass, a mirror, or a lens for a laser machining head or for a plug of a fiber optic cable,
**characterized in that**,
a side (3) of the optical element (1) is covered, at least partially, in particular completely, by a protective film (4), in particular a polyester film that is adhesively attached, via at least one adhesion surface (8), to an end face (5) of the holder (2), said end face surrounding the optical element (1), and that the protective film (4) comprises a lateral overhang (6) for handling the optical element (1) and for pulling off the protective film (4) from the holder (2), and that the side of the protective film (4) facing the optical element (1) is non-adhering at least in the region covering the optical element (1), and that the end face (5) of the holder (2) protrudes vertically above the covered side (3) of the optical element (1) such that contact of the protective film (4) with the optical element (1) is prevented.

2. The optical element according to claim 1, **characterized in that**, starting from the protruding end face (5), the holder (2) continuously extends inwardly up to the optical element (1), in particular conically or concavely.

3. The optical element according to claim 1 or 2, **characterized in that** the at least one adhesion surface (8), which in particular is silicone-based, can be removed from the holder (2) together with the protective film (4) when the protective film (4) is pulled off.

4. The optical element according to one of the preceding claims, **characterized in that** the protective film (4) comprises the at least one exposed adhesion surface (8) only in regions that lie against the end face (5) of the holder (2).

5. The optical element according to claim 4, **characterized in that** the protective film (4) comprises a local adhesion coating (7) forming the at least one exposed adhesion surface (8) only in regions that lie against the end face (5) of the holder (2).

6. The optical element according to claim 4, **characterized in that** the protective film (4) is formed by two film layers (9a, 9b) bonded together by means of an adhesion coating (7) located therebetween, wherein the adhesion coating (7) is covered, up to the at least one exposed adhesion surface (8), by the lower film layer (9b) facing the optical element (1), and in particular that the two film layers (9a, 9b) are formed by two film sections (13a, 13b) of an adhesion film provided with the adhesion coating (7) on one side, the two layers being folded onto one another, the adhesion sides of each lying against one another, wherein the lower film layer (9b) comprises at least one cut-out (10), by means of which the adhesion coating (7) is exposed as an adhesion surface (8).

7. The optical element according to one of the preceding claims, **characterized in that** the optical element (1) protrudes vertically above an adjacent inner edge (15) of the holder (2).

8. The optical element according to one of the preceding claims, **characterized in that** the lateral overhang of the protective film (4) is formed by one or more tabs (6).

9. The optical element according to one of the preceding claims, **characterized by** a protective package (16) surrounding the holder (2), the optical element (1) being arranged in said protective package such that it can be removed from the opened protective package (16) using the lateral overhang (6) of the protective film (4).

## Revendications

1. Élément optique (1) monté dans une monture (2), dans lequel l'élément optique (1) est un verre de protection, un miroir ou une lentille pour une tête de traitement laser ou pour le connecteur d'un câble à fibres optiques,
**caractérisé en ce que**,
une face (3) de l'élément optique (1) est au moins partiellement, et en particulier totalement, recouverte d'un film de protection (4), en particulier un film en polyester, qui est collé à une face frontale (5) de la monture (2) entourant l'élément optique (1) par au moins une surface adhésive (8), et **en ce que** le film de protection (4) présente un débord latéral (6) destiné à la manipulation de l'élément optique (1) et au retrait du film de protection (4) de la monture (2), et **en ce que** la face de film du film de protection (4) orientée vers l'élément optique (1) n'est pas adhésive au moins dans la zone recouvrant l'élément optique (1), et **en ce que** la face frontale (5) de la monture (2) dépasse en hauteur la face (3) recouverte de l'élément optique (1), de sorte qu'un contact du film de protection (4) avec l'élément optique (1) est évité.

2. Élément optique selon la revendication 1, **caractérisé en ce que** la monture (2) s'étend en continu, en particulier de manière conique ou concave, vers l'intérieur en partant de la face frontale (5) en saillie jusqu'à l'élément optique (1).

3. Élément optique selon la revendication 1 ou 2, **caractérisé en ce que** ladite au moins une surface adhésive (8), en particulier à base de silicone, peut être retirée de la monture (2) en même temps que le film de protection (4) lors du retrait du film de protection (4).

4. Élément optique selon l'une des revendications précédentes, **caractérisé en ce que** le film de protection (4) présente ladite au moins une surface adhésive (8) exposée exclusivement dans des zones qui reposent contre la face frontale (5) de la monture (2).

5. Élément optique selon la revendication 4, **caractérisé en ce que** le film de protection (4) présente une pellicule adhésive (7) locale, laquelle constitue ladite au moins une surface adhésive (8) exposée, exclusivement dans des zones qui reposent contre la face frontale (5) de la monture (2).

6. Élément optique selon la revendication 4, **caractérisé en ce que** le film de protection (4) est formé de deux couches de film (9a, 9b) assemblées l'une à l'autre au moyen d'une pellicule adhésive (7) intercalée entre elles, dans lequel la pellicule adhésive (7) est masquée par la couche de film inférieure (9b) orientée vers l'élément optique (1), à l'exception de ladite au moins une surface adhésive (8) exposée, et en particulier **en ce que** les deux couches de film (9a, 9b) sont formées par deux sections de film (13a, 13b) repliées l'une sur l'autre d'un film adhésif revêtu sur une seule face de la pellicule adhésive (7), qui reposent respectivement l'une contre l'autre par leurs faces adhésives, dans lequel la couche de film inférieure (9b) présente au moins un évidement (10) à travers lequel la pellicule adhésive (7) est exposée sous forme de surface adhésive (8).

7. Élément optique selon l'une des revendications précédentes, **caractérisé en ce que** l'élément optique (1) dépasse en hauteur un bord intérieur adjacent (15) de la monture (2).

8. Élément optique selon l'une des revendications précédentes, **caractérisé en ce que** le débord latéral du film de protection (4) est formé par une ou plusieurs languettes (6).

9. Élément optique selon l'une des revendications précédentes, **caractérisé par** un emballage de protection (16) entourant la monture (2), à l'intérieur duquel l'élément optique (1) est disposé de manière à pouvoir être extrait de l'emballage de protection (16) ouvert au moyen du débord latéral (6) du film de protection (4).
